# EUROPEAN PATENT SPECIFICATION

(11) **EP 3 033 907 B1**
(45) Date of publication and mention of the grant of the patent: **19.09.2018**
(21) Application number: 15735491.1
(22) Date of filing: 08.01.2015
(51) Int. Cl.: H04W 28/20, H04L 29/06, H04L 29/08, H04W 28/24

(54) **METHOD AND SYSTEM OF QUALITY OF SERVICE (QOS) NEGOTIATION FOR NETWORK ASSISTED ADAPTIVE STREAMING**
VERFAHREN UND SYSTEM ZUR VERHANDLUNG DER DIENSTGÜTE (QOS) FÜR NETZWERKUNTERSTÜTZTES ADAPTIVES STREAMING
PROCÉDÉ ET SYSTÈME DE NÉGOCIATION DE QUALITÉ DE SERVICE (QOS) DESTINÉS À UNE DIFFUSION EN CONTINU ADAPTATIVE ASSISTÉE PAR RÉSEAU

(30) Priority: 08.01.2014 US 201461925153 P
(43) Date of publication of application: 22.06.2016
(73) Proprietor: Huawei Technologies Co., Ltd., Longgang District Shenzhen, Guangdong 518129 (CN)
(72) Inventor: WANG, Xin, Rancho Palos Verdes, CA 90275 (US); ZHOU, Lei, Shenzhen 518048 (CN); FAN, Yuqun, Shenzhen 518048 (CN)
(74) Representative: Körber, Martin Hans
(86) International application number: PCT/US2015/010687
(87) International publication number: WO 2015/106022

(56) References cited:
- WO-A1-2012/145902
- US-A1- 2009 177 650
- US-A1- 2009 285 218
- US-A1- 2010 054 257
- US-A1- 2010 217 855
- US-A1- 2012 002 540
- US-A1- 2013 275 615
- US-A1- 2013 290 493
- US-B1- 7 043 225
- XIN WANG ET AL: "DASH SAND CE: QoS negotiation mechanism and QoS signalling parameters", 107. MPEG MEETING; 13-1-2014 - 17-1-2014; SAN JOSE; (MOTION PICTURE EXPERT GROUP OR ISO/IEC JTC1/SC29/WG11),, no. m32332, 8 January 2014 (2014-01-08), XP030060784,

## Description

### FIELD OF THE INVENTION

Embodiments of the present invention relate to communication networks and in particular to quality of service (QoS) processes used in wireless and wired communication networks.

### BACKGROUND

In the field of computer networking, the term "quality of service (QoS)" generally refers to resource reservation control mechanisms. These mechanisms are used to coordinate and manage varying priority levels to multiple applications, users, or data flows, or to ensure and maintain appropriate levels of performance encountered during respective data flow or service sessions. These sessions can be measured according to a variety of characteristics including: bit rate; delay or latency; packet loss; data synchronization and/or bit error rate. Content service providers can offer QoS guarantees to consumers, thereby ensuring a minimum satisfactory level of service. Management of the QoS guarantees becomes complex when network capacity is insufficient, typically for bandwidth intensive services such as real-time online streaming of audio and/or video data (movies, telephone, music, or television for instance), since these services often require fixed bit rates and are delay and synchronization sensitive.

Typically, network entities or protocols that collectively support QoS can agree on a service-level contract or agreement with a service consumer such as an application and therein reserve capacity in network nodes for facilitating the data communication. During a communication session, the QoS mechanism monitors the achieved level of performance and dynamically adjusts scheduling priorities within the network nodes to accommodate the pre-defined QoS service-level agreements. However, as the nature of data networks evolve, new data transmission standards and architectures have been introduced. Now traditional QoS solutions have become obsolete or insufficient to meet or enable the new features that have become available through industry developments.

US 2013/0290493 A1 discloses that an application function module interacts with an application on a remote device that utilizes dynamic policy and charging control to receive an adaptive multimedia stream. A policy and charging rules function (PCRF) module implements policy and charging control decisions, and a policy and charging enforcement function (PCEF) module enforces policy decisions received from the PCRF.

US 2010/0054257 A1 discloses that a Deep Packet Inspection device is integrated into a provider edge router associated with a user agent client or provided externally. The DPI device monitors the exchange of packets between an originating proxy and a user agent client and inspects the packets to identify SIP control messages.

US 2012/0002540 A1 discloses a method and apparatus for authorizing Quality of Service (QoS) at a Policy and Charging Rules Function (PCRF) node in response to receiving a service request for a subscriber having a requested QoS, a QoS Negotiation Attribute Value Pair (AVP) and a QoS Upgrade AVP such that the QoS Negotiation AVP takes precedence over the QoS Upgrade AVP.

WO 2012/145902 A1 discloses a method and device for controlling and/or policy and charging control of a guest user.

US 2009/0177650 A1 discloses a method, communication system and collection controller allowing third party influence on the provision of a service to a user station.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

One embodiment of the present invention performs QoS negotiation for services like network assisted adaptive streaming. QoS reservations are based on information provided from a network service provider and a content service provider. The content service provider can be an audio, video, image and/or data streaming provider. For example, the data can include live scores and captions in different languages. QoS negotiation is supported between network service providers and content service providers on behalf of content service provider subscribers. Typically, a content service provider's subscription profile repository (SPR) is not directly accessible to a network service provider. For example, the SPR includes subscribers' service subscription account information which is usually confidential or business sensitive to the content service provider and/or the subscribers, and the content service provider has no incentive to share directly with the network service providers. Embodiments overcome such limitations of previous systems that were limited to allowing QoS requests and grants between a client device and network service provider based on a direct network accessible subscription profile repository. QoS reservations are based on a content service provider's user subscription information without exposing the content service provider's user lists, databases, in one implementation. Therefore, more targeted QoS reservations are allowed that are based on both network service provider user information and content service provider user information.

One embodiment of the present invention is directed to a method, as further defined in claim 1, and a device, as further defined in claim 3, for QoS negotiation between a network service provider and a content service provider.

### BRIEF DESCRIPTION OF THE DRAWINGS

The accompanying drawings are incorporated in and form a part of this specification. The drawings illustrate embodiments. Together with the description, the drawings serve to explain the principles of the embodiments:
Figure 1 shows an exemplary session establishment for a session initiation protocol (SIP) and also shows exemplary communications, in accordance with various embodiments.
Figure 2 shows exemplary communication flow during network assisted quality of service (QoS) negotiation, in accordance with various embodiments.
Figure 3 shows an exemplary computer implemented process for network assisted QoS negotiation, in accordance with various embodiments.
Figure 4 shows an exemplary computer implemented process performed by a network component during network-assisted QoS negotiation, in accordance with various embodiments.
Figure 5 shows a block diagram of an exemplary computer system platform in accordance with various embodiments.
Figure 6 shows a block diagram of another computer system platform in accordance with various embodiments.

### DETAILED DESCRIPTION

Reference will now be made in detail to the preferred embodiments of the claimed subject matter, a method and system for the use of a radiographic system, examples of which are illustrated in the accompanying drawings. While the claimed subject matter will be described in conjunction with the preferred embodiments, it will be understood that they are not intended to limit these embodiments. On the contrary, the claimed subject matter is intended to cover alternatives, modifications and equivalents, which may be included within the scope as defined by the appended claims.

Furthermore, in the following detailed descriptions of embodiments of the claimed subject matter, numerous specific details are set forth in order to provide a thorough understanding of the claimed subject matter. However, it will be recognized by one of ordinary skill in the art that the claimed subject matter may be practiced without these specific details. In other instances, well known methods, procedures, components, and circuits have not been described in detail as not to obscure unnecessarily aspects of the claimed subject matter.

Some portions of the detailed descriptions which follow are presented in terms of procedures, steps, logic blocks, processing, and other symbolic representations of operations on data bits that can be performed on computer memory. These descriptions and representations are the means used by those skilled in the data processing arts to most effectively convey the substance of their work to others skilled in the art. A procedure, computer generated step, logic block, process, etc., is here, and generally, conceived to be a self-consistent sequence of steps or instructions leading to a desired result. The steps are those requiring physical manipulations of physical quantities. Usually, though not necessarily, these quantities take the form of electrical or magnetic signals capable of being stored, transferred, combined, compared, and otherwise manipulated in a computer system. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present claimed subject matter, discussions utilizing terms such as "storing," "creating," "generating," "protecting," "receiving," "sending," "determining," "selecting," "initiating," "mapping," encrypting," "decrypting," or the like, refer to the action and processes of a computer system or integrated circuit, or similar electronic computing device, including an embedded system, that manipulates and transforms data represented as physical (electronic) quantities within the computer system's registers and memories into other data similarly represented as physical quantities within the computer system memories or registers or other such information storage, transmission or display devices.

QoS negotiation is performed for network assisted adaptive streaming. Embodiments allow QoS reservations to be based advantageously on information from a network service provider and a content service provider. The content service provider can be an audio, video, image and/or data streaming provider. QoS negotiation is supported between network service providers and content service providers on behalf of content service provider subscribers. Typically, a content service provider's subscription profile repository (SPR) is not directly accessible to a network service provider. For example, the SPR includes subscribers' service subscription account information which is usually confidential or business sensitive to the content service provider and/or the subscribers, and the content service provider has no incentive to share directly with the network service providers. Embodiments overcome such limitations of previous systems that were limited to allowing QoS requests and grants between a client device and network service provider based on a direct network accessible subscription profile repository. QoS reservations are based on a content service provider's user subscription information without exposing the content service provider's user lists, databases, in one implementation. Therefore, more targeted QoS reservations are allowed that are based on both network service provider user information and content service provider user information.

Embodiments enable new network assisted business relationships and models between network operators and content service providers. Differentiated and suitable QoS with network assistance can be provided for different content service providers as well as their subscribers of different levels. This allows network operators to have more efficient and optimized network resource allocation that can be potentially profitable. Ease of evolution and migration from existing practices are also enabled with respect to separate user/client subscription relationships with network operators and content service providers. With such systems, content service providers that need network assisted services can stay competitive by providing a higher level of QoS customized through QoS negotiation. For example, the content service providers can be third party content service providers that provide video streaming, data storage, and application services. Embodiments also can include terminal and network products that support network assisted QoS reservations.

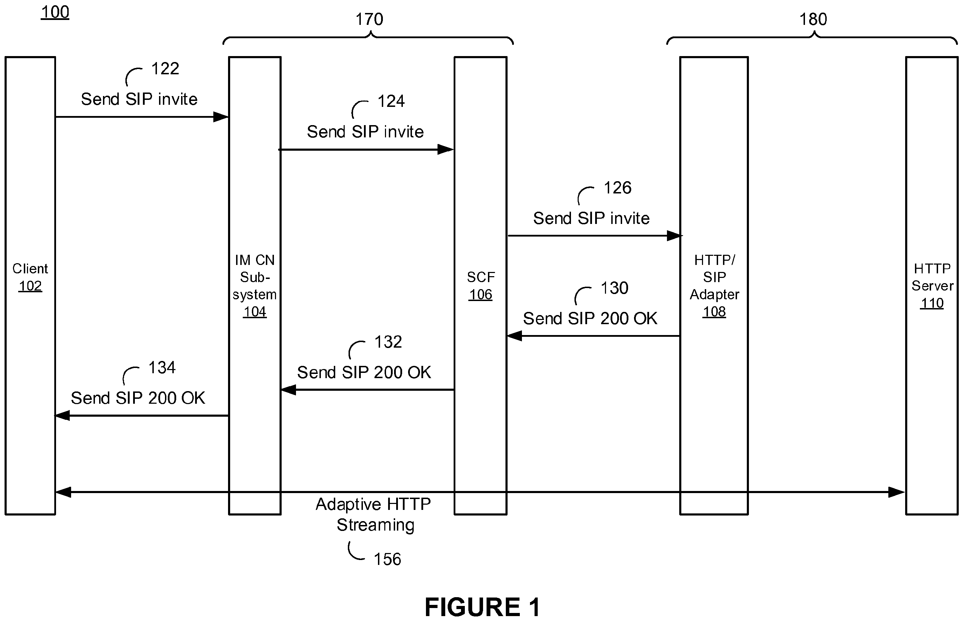

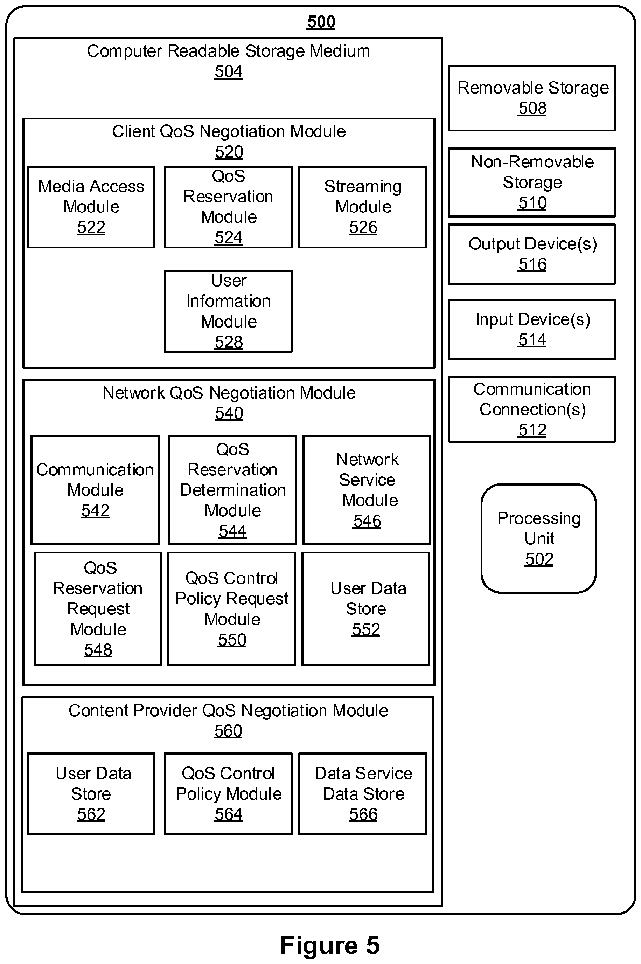

Figures 1-2 and Figures 5-6 illustrate example components used by various embodiments of the present invention. Although specific components are disclosed in Figures 1-2 and Figures 5-6, it should be appreciated that such components are exemplary. That is, embodiments of the present invention are well suited to having various other components or variations of the components recited in 1-2 and Figures 5-6. It is appreciated that the components in Figures 1-2 and Figures 5-6 may operate with other components than those presented, and that not all of the components of Figures 1-2 and Figures 5-6 are required to achieve the goals of embodiments of the present invention.

The term "user equipment" (UE) is used herein to refer to terminals. For example, a terminal can be wireless connected handset, a cell phone, a smart phone, a tablet, or another mobile computing device. Embodiments are herein described with respect to the session initiation protocol (SIP) but can function with one or more other protocols. Systems are herein also described with respect to 3rd Generation Partnership Project (3GPP) networks and wired networks but it is appreciated they could also function with other network types and combinations thereof.

Figure 1 shows exemplary session initiation protocol (SIP) connection establishment and communications, in accordance with various embodiments. Figure 1 depicts SIP based communications for setting up adaptive hypertext transfer protocol (HTTP) streaming. Exemplary communications diagram 100 includes a client 102, an Internet Protocol (IP) Multimedia (IM) Core Network (CN) Subsystem 104, a session control function (SCF) 106, an HTTP/SIP adapter 108, and an HTTP server 110. The IM CN subsystem 104 and session control function 106 can be part of a network component 170. The network component 170 can be part of a network service provider providing wireless and/or wired connectivity to one or more networks. The one or more networks can include the Internet. The HTTP/SIP adapter 108 and HTTP server 110 are part of a server 180 of a content service provider and provide content. For example, the server 180 can be a server for communicating free or subscription based video content including, for instance, movies.

The client 102 can be a UE including, such as, a laptop, a notebook, a desktop computer, a smart phone, tablet, or any other computing device type. The client 102 can display, render, play, or output content that is accessible from the HTTP server 110.

IM CN subsystem 104 receives a SIP invitation within a network provider based system. The SCF 106 manages the signaling from end-user or client to services and other networks. The HTTP/SIP adapter 108 receives SIP invites, sends responses to SIP invitations, and facilitates adaptive HTTP streaming.

The HTTP server 110 provides accesses to various data resources. For example, the HTTP server 110 can stream video and/or audio to the client 102. The HTTP server 110 adaptively streams data with the client 102. It is noted that, though the HTTP server 110 is used herein as an exemplary server to provide access to data resources, servers of other types could also function with other protocol types and be used.

The client 102 sends SIP invite 122 to IM CN subsystem 104. The client 102 initiates the streaming session by sending an SIP INVITE to the IM CN subsystem including a session description protocol (SDP) offer which includes media information. The SIP invite 122 can include media information and user information. For example, the media information includes information associated with video and/or audio content. The IM CN subsystem 104 sends the SIP invite 122 as an SIP invite 124 to the SCF 106.

The SCF 106 sends the SIP invite 124 as an SIP invite 126 to the HTTP/SIP adapter 108. The HTTP/SIP adapter 108 processes the SIP invite 126 to configure a session between the HTTP server 110 and the client 102. The HTTP/SIP adapter 108 communicates with the HTTP server 110 to determine whether the client 102 is allowed to access resources from the HTTP server 110. For example, the client 102 can be allowed to access video and/or audio based on a subscription.

If the client 102 is allowed to access content from the HTTP server 110, the HTTP/SIP adapter 108 sends an SIP 200 OK 130 to the SCF 106. The SCF 106 then sends an SIP 200 OK 132 to the IM CN subsystem 104. Based on the SIP 200 OK 130, the SCF 106 and the IM CN subsystem 104 can configure themselves to provide communication between the HTTP server 110 and client 102.

The IM CN subsystem 104 then sends an SIP 200 OK 132 as SIP 200 OK 134 to the client 102. After interacting with a policy control and charging rules function (PCRF) of the SCF 106 for determining a QoS reservation, the IM CN subsystem forwards the SIP 200 OK 134 to the client 202 with an SDP offer which describes authorized QoS information. The client 102 can then configure itself based on the SIP 200 OK 132 to communicate with the HTTP server 110 and perform adaptive HTTP streaming 156 with the server 110 based on the QoS negotiation.

In some embodiments, the dynamic adaptive streaming over hypertext transfer protocol (DASH) standard can be used. DASH is a standard developed to provide media content and is partially described in International Organization for Standardization (ISO)/International Electrotechnical Commission (IEC) 23009-1, First Edition, 2012 ("23009-1"), which is incorporated herein by reference in its entirety. In addition, ISO/IEC 23009-1, Technical Corrigendum 1, 2013 is incorporated herein by reference in its entirety. In DASH, there are two main devices: the Hypertext Transfer Protocol (HTTP) server(s) that provide the content and the DASH client that downloads the content and is associated with the viewer (or user). Currently, DASH leaves control to the client, which can request content using the HTTP protocol.

DASH functions to partition media content into a sequence of smaller media segments with each segment being a short interval of playback time. For example, the media content can be a video of potentially many minutes or hours in durations that is partitioned into a sequence of smaller media segments. Each segment is made available to a DASH client in multiple alternative representations, each at a different bit rate. As the content is played, the DASH client automatically selects a next segment (to be played) from its representations. This selection is based on various factors, including the current network conditions and an estimate of future network conditions. The resulting benefit is that the DASH client can adapt to changing network conditions and play back content at a highest level of quality without stalls or rebuffering events.

A DASH client can be any device with DASH and media content playing functionality having wireless and/or wireline connectivity. For example, a DASH client can be a desktop or laptop computer, smartphone, tablet, set-top box, televisions connected to the internet, and the like.

Recent developments have been proposed to facilitate client operation via QoS signaling. For example, a network entity, such as the application function (AF) of the 3rd Generation Partnership Project (3GPP) Policy Charging and Control (PCC) architecture, can provide guaranteed bit rate (GBR) and/or maximum bit rate (MBR) information to clients. However, conventional data communication-operator networks make such decisions based on limited application layer information and the consumer/subscriber's profile. In order to provide consistent QoS support and save limited radio and/or network resources, entities can benefit from collecting as much information as possible from clients, servers and elements on external networks.

The 3GPP introduced the PCC architecture to apply policy and charging control functionality to networks compliant with the 3GPP Internet Protocol Connectivity Access Network (IP-CAN) standard. The service level QoS parameters defined in 3GPP are: QoS Class Identifier (QCI); Allocation and Retention Priority (ARP); GBR; and MBR. The below table I describes the various QoS parameters in a 3GPP IP-CAN.

**Table I - Exemplary 3GPP QoS parameters and QoS reservation parameters**

| Parameter Name | Type | Unit | Semantics |
|---|---|---|---|
| QCI | Int | | The QCI is a scalar that is used as a reference to a specific packet forwarding behavior (e.g., packet loss rate, packet delay budget) to be provided to a service data flow (SDF). This may be implemented in the access network by the QCI referencing node specific parameters that control packet forwarding treatment (e.g., scheduling weights, admission thresholds, queue management thresholds, and link layer protocol configuration), that have been preconfigured by the operator at a specific node(s) (e.g., evolved Node B (eNodeB)). |
| ARP | Int | | The QoS parameter ARP contains information about the priority level, the pre-emption capability and the pre-emption vulnerability. The priority level defines the relative importance of a resource request. This allows deciding whether a bearer establishment or modification request can be accepted or needs to be rejected in case of resource limitations (typically used for admission control of GBR traffic). The range of the ARP priority level is 1 to 15 with 1 as the highest level of priority. |
| GBR | Int | bits/sec | The GBR denotes the guaranteed bit rate that is provided by a GBR bearer. |
| MBR | Int | bits/sec | The MBR limits the maximum bit rate that can be provided by a GBR bearer (e.g., excess traffic may get discarded by a rate policing function). The MBR for a GBR bearer is equal to the GBR in current 3GPP release. There is no support for "MBR > GBR" bearers. |

The policy control and charging rules function (PCRF) in the PCC architecture accepts input for PCC decision making from several entities and authorizes and QoS resources. The input to render the PCC decision can include information in a subscription profile repository (SPR) having information for a subscriber coupled to a specific public data network (PDN).

The SPR can include the subscriber's allowed services for each allowed service a pre-emption priority and information on a subscriber's allowed QoS including: the subscribed guaranteed bandwidth QoS; a list of QoS class identifiers together with the MBR limit; and; for real-time QoS class identifiers, a GBR limit. The subscriber's allowed services can be a list of service IDs. The SPR can further include a subscriber's charging related information and spending limits profile. An indication can include that policy decisions depend on policy counters available at the online charging system (OCS) describing a spending limit associated with the account and optionally the list of relevant policy counters. Also included are a subscriber category, a subscriber's usage monitoring related information, a subscriber's profile configuration, sponsored data connectivity profiles, multimedia priority service (MPS) evolved packet service (EPS) priority, MPS Priority Level, and IP multimedia subsystem (IMS) signaling priority. For example, the subscriber's charging related information is billing information. The 3GPP TS 23.401 provides more detail on the MPS subscription.

To enable application layer information and QoS information exchange between a client and a network, 3GPP introduced IMS based session initiation and QoS reservation procedures for 3GP-DASH. Network operators and content service providers can enable different QoS control policies separately and independently. In an exemplary scenario, a mobile network operator can ensure high video quality for premium users X and Y of the network. For this purpose, the mobile network operator can guarantee a certain level of bandwidth, for example 2Mbps, to be provided based on network subscription information. However, a conflict can exist whereby the content service provider wants to apply different QoS policies on these two users based on its own service subscription information and user management strategy. For instance, the user Y, as a VIP content service subscriber, can receive content with 4 Mbps of guaranteed bandwidth, whereas the user X, only a normal service subscriber, with bandwidth restricted up to 1 Mbps.

Such QoS control policies can include GBR and MBR applied for each user. A network entity's PCRF can make QoS decisions without any information about the content service provider's QoS control policy. Such inconsistent QoS management can negatively affect end-to-end throughput and cause unnecessary network resource waste. To solve this problem, information associated with the content service provider's QoS control policy should be provided to PCRF as input. Embodiments described herein are based on the QoS reservation procedures mentioned above.

A QoS control policy can be applied for the content service provider user, and the policy can be conveyed to the client through a separate signaling plane or carried in a media presentation description (MPD) file. The client can provide such information to the AF as input information for the PCRF in a QoS reservation request. One or more of the following QoS control policy parameters listed in Table II below can be provided as new DASH metrics.

**Table II - Exemplary QoS Control Policy Parameters**

| Parameter Name | Type | Unit | Semantics |
|---|---|---|---|
| SPGBR | Int | bits/sec | Guaranteed bit rate that the content service provider expects to be provided to the user. |
| SPMBR | Int | bits/sec | Maximum bit rate that the content service provider should apply to the user. |
| SPID | String | id | Used to identify content service provider, may be in numerous forms, e.g., a number or the host realm. |

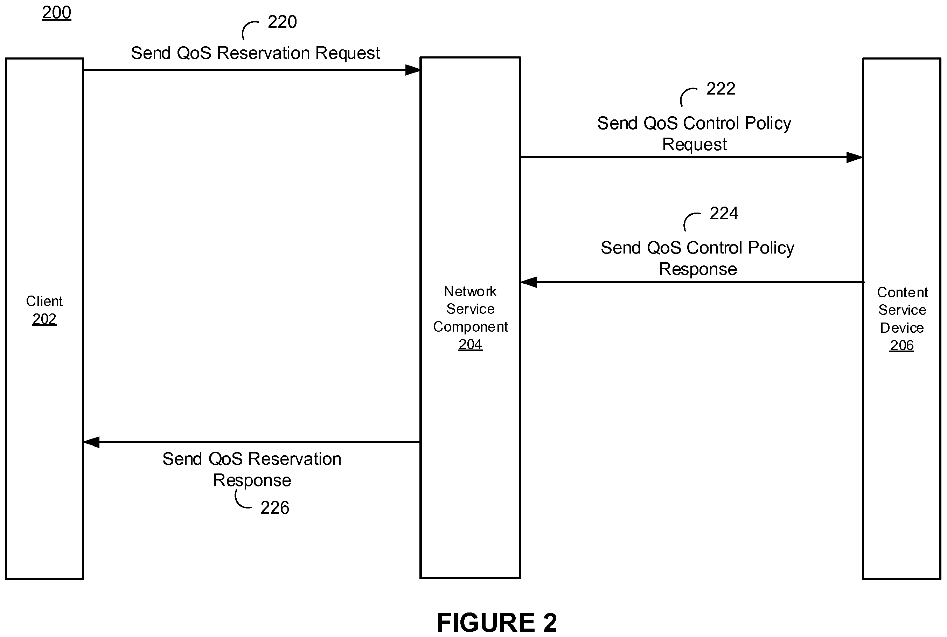

Figure 2 shows exemplary communications during network assisted quality of service (QoS) negotiation, in accordance with various embodiments. Figure 2 depicts exemplary communications during configuration of a QoS reservation between a client 202 and a network service component 204 for network assisted services (NAS). For example, the NAS could be content streaming. Figure 2 further depicts QoS control policy negotiation procedures to enable a network service component 204 to retrieve QoS control policy information from a content service device 206. For example, the content service device 206 can be a streaming video server. The communications of Figure 2 can be sent through a session initiation protocol (SIP) connection. For example, the communications of Figure 2 can be established via the communication of Figure 1. The QoS of the network assisted services are negotiated based on the relationship between network operator of the network service component 204 and the content service provider of the content service device 206 and the subscription levels of the user of client 202 as a network subscriber and a service subscriber.

The QoS policy information can be provided by the content service device 206 to the network operator of network service component 204. The QoS policy information can function in an authentication and/or security capacity. For example, an authentication and safety problem can be presented where the QoS control policy of a content service provider, associated with content service device 206, is provided directly by the client 202 which is not trusted by the network service component 204.

The exemplary communications diagram 200 includes the client 202, the network service component 204, and content service device 206. For example, the network service component 204 can be the network component 170. As another example, the content service device 206 can be the server 180 or the HTTP server 110. The communications diagram 200 represents exemplary communications in and/or across one or more wired networks, one or more wireless networks, or a combination thereof. The client 202 can be any of a variety of computing devices as described herein. A user operating the client 202 has a network account with the network associated with the network service component 204 and also a content service provider account with the content service provider associated with the content service device 206.

The network service component 204 can be controlled by a network operator (NO) and can be part of an Internet service provider (ISP), telecommunications service provider, and the like. The network service component 204 can be a hub, a switch, a gateway, a router, a wireless router, a wireless access point, or a computing device. The network service component 204 can be part of a wireless network, a cable network, or a digital subscriber line (DSL) network.

The content service device 206 can be a hub, a switch, a gateway, a router, a wireless router, a wireless access point, or a computing device. The content service device 206 streams multimedia content, data and information, such as text, image, video and/or audio, to the client 202. The content service device 206 can thus be a third party content service provider relative to the network associated with the network service component 204 and the client 202.

The client 202 sends QoS reservation request 220 to the network service component 204. For example, the client 202 can send the QoS reservation request 220 to an application function (AF) of the network service component 204 through a SIP connection. The QoS reservation request includes media description information and user information in an SDP offer. The media description information can be based on an MPD file from the content service device 206. The MPD file indicates that a video is available in three levels of quality standard definition (SD), portable definition (PD), and high definition (HD), for instance. The client 202 allows the user to select a quality level among the available quality levels. For example, a user of the client 202 can select an HD quality level. The QoS reservation request 220 then includes an indicator of the user's selection and the associated bandwidth requested. For example, the user can select an HD quality level based on paying a fee while the PD and/or SD quality levels are free. In some embodiments, the user can select a smooth playback option associated with dynamic streaming. For example, the dynamic streaming could be using the DASH standard. The user's quality level selection can be treated as optional based on the network assisted QoS negotiation, as described herein. For example, the network assisted QoS negotiation could consider or ignore the user's quality level selection.

The media description information includes a proposed minimum and maximum bandwidth which was processed (e.g., parsed) from an MPD file. The user information includes the user's identifier (ID) with respect to the content service provider associated with content service device 206 and a session identifier (ID).

The network service component 204 sends QoS control policy request 222 to the content service device 206 based on the QoS reservation request 220. The AF of the network service component 204 initiates the QoS control policy request 222 to the content service device 206 with user information.

The AF of the network service component 204 provides the following application session related information, based on SIP and SDP: subscriber Identifier; IP address of the UE or client; media type; media format; e.g. media format sub-field of the media announcement and all other parameter information associated with the media format; bandwidth; sponsored data connectivity information; and flow description which can include source and destination IP address and port numbers and the protocol. The AF of the network service component 204 can further provide: an AF application identifier; an AF communication service identifier (e.g. IMS communication service identifier); a UE provided via AF; an AF application event identifier; an AF record information, a flow status (e.g., for gating decision); a priority indicator, which can be used by the PCRF to guarantee service for an application session of a higher relative priority; an emergency indicator; and an application service provider. The application service provider can be identified in numerous forms, e.g., the AF application identifier or the host realm at the diameter level.

The content service device 206 verifies the user information including determining whether the user has an account and the type of account associated with the user. For example, the type of account can be a free account, a free subscriber account, or paid subscriber account. Embodiments can support various account levels including but not limited to, introductory, promotional, a standard service level with SD and/or PD versions, and various premium service levels. The premium service levels can include HD, 4K, 8K, or 10K versions in one example.

The user information can include additional parameters added to the process to enable the QoS negotiation as shown in Table III.

**Table III - Exemplary user information parameters**

| Parameter Name | Type | Unit | Semantics |
|---|---|---|---|
| SUID | String | id | Service subscriber's ID |
| SULevel | (m, n) | (int, int) | Service subscriber's membership level, with 0<=m<=n, with 0 as basic and n as the highest level of the membership, and m as the current membership level of the subscriber. |
| SEID | String | id | Session ID used to identify the service flow provided by content service provider. |
| SURL | String | url | Service URL for network to communicate with server. |

The content service device 206 sends QoS control policy response 224 to the network service component 204. The content service device 206 can respond to the QoS control policy request 222 with the QoS control policy applied to the user. The QoS control policy response 224 can include QoS parameters including a guaranteed bit rate (GBR) and/or a maximum bit rate (MBR). For example, a user with a premium account entitling the user to access HD content based on the QoS control policy can be entitled to receive a guaranteed bandwidth of four megabits per second (Mbps).

Based on the QoS control policy response 224, network user information, and the QoS reservation request, the network service component 204 generates QoS reservation response 226. The network service component 204 sends QoS reservation response 226 to the client 202. The QoS reservation response 226 can include a QCI, an ARP, a GBR, and/or a MBR.

In one embodiment, the generating of the QoS reservation response 226 involves the PCRF. The AF of network service component 204 sends the QoS reservation request 220 and the QoS control policy response 224 to a policy control and charging rule function (PCRF) (e.g., through an Rx interface of the PCRF). For example, the QoS reservation request 220 and the QoS control policy response 224 can be sent to the PCRF through an Rx interface of the PCRF.

The PCRF determines the QoS that is to be provided to the client 202 and/or the user of the client 202. The PCRF can then make a policy charging and control (PCC) determination, based on the QoS reservation request 220 and the QoS control policy response 224. The determination includes how much resources will be reserved for the client 202. For example, the resources reserved for client 202 can be bandwidth resources. The PCC determination can be based on a subscription profile repository (SPR) that includes network subscription information. The subscription information can include information of the service level of the user of client 202. For example, the user's service levels can include a standard user level, a premium user level, a 3G user level, or a 4G user level.

The PCRF can then send the PCC determination to the AF. The AF then sends authorized QoS information as a QoS reservation response 226 to the client 202 in a SIP 200 OK response with an SDP offer. The authorized QoS information can include a GBR and/or a MBR.

The QoS reservation response information can be enforced by a function of network service component 204 such as a policy and charging enforcement function (PCEF). For example, the PCEF can enforce a GBR and/or MBR for communication and traffic from the content service device 206 and the client 202. The PCEF can be part of a gateway component of the network service component 204. The gateway can be coupled to an evolved node B (eNodeB) which can be a transceiver station communicating with the client 202.

The PCRF can also communicate with an online charging system. The online charging system can charge a user of client 202 for various levels of service. For example, the online charging system can charge a user's account a particular dollar amount for providing a particular bandwidth, GBR, or MBR.

The client 202 receives the QoS reservation response 226. The client 202 then selects one or more representations and associated segments and sub-representations based on an MPD file and the QoS reservation response 226. For example, the client 202 can select a lower bitrate and/or lower quality representation associated with a PD version of a video based on the QoS reservation response 226 having a GBR of 1 Mbps. As another example, the client 202 can select an SD version if a GBR of 2 Mbps is received and can select an HD version if a GBR of 4 Mbps is received. The parameters of the QoS reservation 226 can be used in place of bandwidth estimation procedures usually performed by the client 202.

In some embodiments, the network can change the GBR and/or the MBR settings over time as a result of a change in one or more network conditions. For example, expiration information can be added together with GBR and/or MBR parameters in the QoS reservation response 226 so that a client can take advantage of the available time information of GBR and/or MBR to adapt to bandwidth change in a timely manner. The type and semantics of the parameter are shown in Table IV. The parameter can be used for server and network assisted DASH (SAND).

**Table IV - Exemplary expiration information**

| **Parameter Name** | **Type** | **Unit** | **Semantics** |
|---|---|---|---|
| ExpT | Decimal | Sec | Indicates available or expiration time information about the QoS policy applied on the user. |

The QoS reservation response 226 can thus include at least one or more of the parameters of Table V.

**Table V - Exemplary QoS reservation parameters**

| **Parameter Name** | **Type** | **Unit** | **Semantics** |
|---|---|---|---|
| ExpT | Decimal | sec | Indicates available or expiration time information about the QoS policy applied on the user. |
| GBR | Int | bits/sec | Guaranteed bit rate, denotes the bit rate that can be expected to be provided by a GBR bearer. |
| MBR | Int | bits/sec | Maximum bit rate, limits the bit rate that can be expected to be provided by a GBR bearer (e.g. excess traffic may get discarded by a rate policing function). |

Accordingly, embodiments of the claimed subject matter provide for QoS negotiation in systems that engage in network assisted adaptive streaming by including the various described parameters in information exchanged during a session initiation. Embodiments can support QoS negotiation for network assisted services for Moving Picture Experts Group (MPEG) DASH streaming, and 3GPP enhanced DASH (eDASH) streaming.

Embodiments can thus support one or more of the following DASH metrics of Table VI.

**Table VI - Exemplary DASH Metrics**

| Parameter Name | Type | Unit | Semantics |
|---|---|---|---|
| MinBandwidth | Int | bits/sec | Minimum required bandwidth of the service, extracted from MPD |
| MaxBandwidth | Int | bits/sec | Maximum required bandwidth of the service, extracted from MPD |
| SPGBR | Int | bits/sec | Guaranteed bit rate that content service provider expect to provide to the user. |
| SPMBR | Int | bits/sec | Maximum bit rate that content service provider should apply on the user. |
| SPID | String | id | Used to identify a content service provider, may be in numerous forms, e.g., a number or the host realm. |
| SUID | string | id | Service subscriber's ID |
| SULevel | (m, n) | (int, int) | Service subscriber's membership level, with 0<=m<=n, with 0 as basic and n as the highest level of the membership, and m as the current membership level of the subscriber. |
| SEID | String | id | Session ID used to identify the service flow provided by content service provider. |
| SURL | string | url | Service URL for network to communicate with server. |

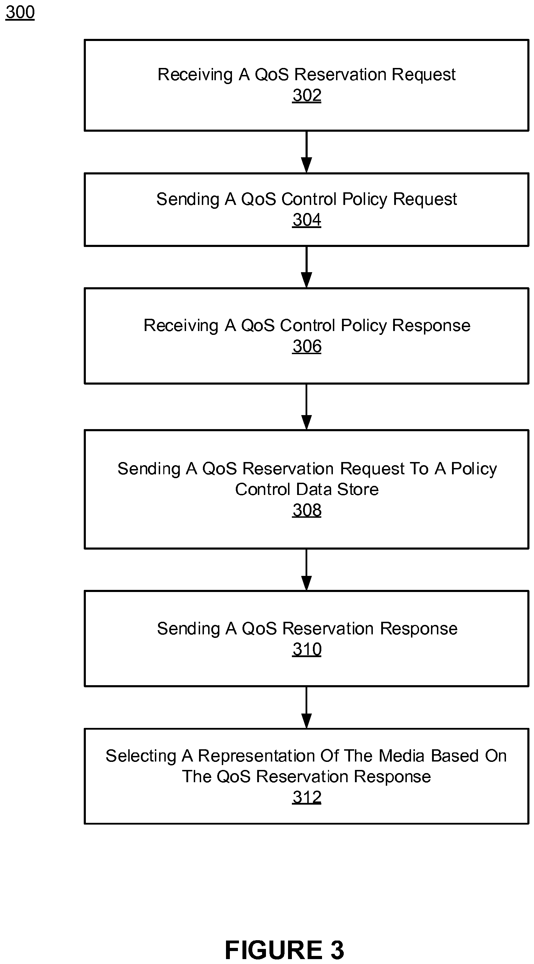

With reference to Figures 3-4, flowcharts 300-400 illustrate example functions used by various embodiments of the present invention for QoS negotiation, as described herein. Although specific function blocks ("blocks") are disclosed in flowcharts 300-400, such steps are exemplary. That is, embodiments are well suited to performing various other blocks or variations of the blocks recited in flowcharts 300-400. It is appreciated that the blocks in flowcharts 300-400 can be performed in an order different than presented, and that not all of the blocks in flowcharts 300-400 need be performed.

Figure 3 shows an exemplary process for network assisted QoS negotiation, in accordance with various embodiments. Figure 3 depicts a process 300 for QoS negotiation for configuring a QoS reservation between a network and a client for service from a content service provider. For example, the network can be associated with the network service component 204, the client can be the client 202 and the content service provider can be the content service device 206. The communications of process 300 can be sent through a session initiation protocol (SIP) connection, for instance. The blocks 302-310 can be performed by the network service component 204. The block 312 can be performed by the client 202.

At block 302, a QoS reservation request is received, for example, from a client device (e.g., the client 202). The QoS reservation request includes media information and user information, as described herein. The QoS reservation request is received, for example, by the network service component 204.

At block 304, a QoS control policy request is sent. The QoS control policy is sent from a server of a network service provider to a content service provider. For example, the QoS control policy can be sent from the network service component 204 of a network service provider to a content service device 206 of a video content service provider. The QoS control policy request includes user information allowing a content service provider to identify a user of the client device. For example, the user information can allow the content service device 206 to identify a user of the client 202 based on user ID.

At block 306, a QoS control policy response is received. The QoS control policy response is received from the server of the content service provider. For example, the QoS control policy response can be received from the content service device 206. The QoS control policy response can include an application of the QoS control policy of the content service provider to the user. For example, the QoS control policy response can include a five megabit per second bandwidth allocation or a reservation indicator based on the user's premium subscription with the content service provider.

At block 308, a QoS reservation request is sent to a PCRF. The QoS reservation request sent to the PCRF can be based on the QoS control policy response and the QoS reservation request. The PCRF can be a component of a network service provider. The QoS reservation request can be sent to a PCRF through an Rx interface of the PCRF.

At block 310, a QoS reservation response is sent to the client. For example, the QoS reservation response is sent from the network service component 204 to the client 202. The QoS reservation response includes authorized QoS information in response to an approval of the SDP offer from the PCRF. For example, the authorized QoS information can include a GBR and/or an MBR.

At block 312, a representation of the media is selected based on the QoS reservation response. For example, the client 202 selects a particular bitrate of a video segment based on the QoS reservation response. As another example, the minimum bandwidth and/or the maximum bandwidth information of the QoS reservation response can be used to process (e.g., parse) a media presentation description (MPD) file and to select a representation associated with the bandwidth that can be rendered smoothly. Streaming and rendering of the media can then commence.

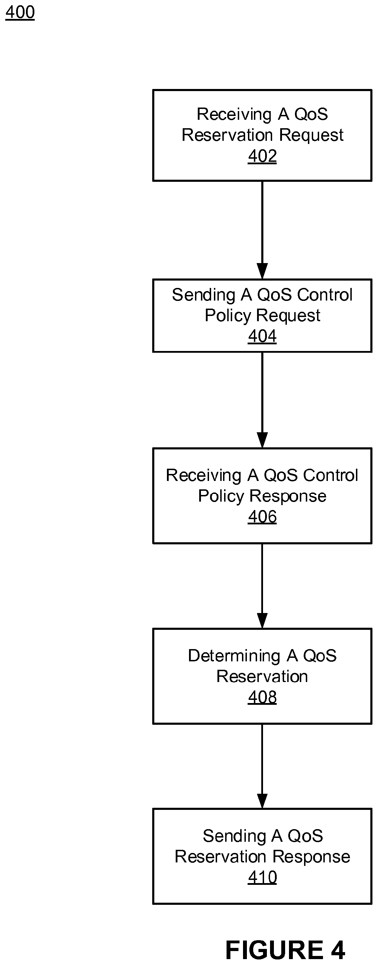

Figure 4 shows an exemplary process performed by a network component during network-assisted QoS negotiation, in accordance with various embodiments. Figure 4 depicts a process 400 that is performed by a network component during a process for determining a QoS reservation for a client device. For example, the process 400 can be performed by the network service component 204 for determining a QoS reservation for the client 202. The communications of process 400 can be sent through a session initiation protocol (SIP) connection.

At block 402, a QoS reservation request is received. The QoS reservation request includes user information and media information. For example, the media information can be based on an MPD file. The user information includes a user ID associated with a resource provider, a content service provider, or a service provider. The QoS reservation request can be received at a device of a network service provider from a client device. For example, the network service provider can be an ISP or a telecommunications service provider and the client device can be user equipment. The QoS reservation request is sent to an application function of the network service provider. In some embodiments, the QoS reservation request comprises a session description protocol (SDP) offer.

At block 404, a QoS control policy request is sent. The QoS control policy request includes one or more portions of the user information. For example, the user information can include a user identifier. The QoS control policy request can be sent to a resource, content, or service provider. The content service provider can adaptively stream video content.

At block 406, a QoS control policy response is received. The QoS control policy response is based on the QoS control policy of a content service provider. The content service provider can be a streaming video service provider or a streaming audio service provider. For example, the QoS control policy of the content service provider indicates that a user with a premium subscription to the content service provider should receive a higher bandwidth allocation and thereby a higher level of QoS.

At block 408, a QoS reservation response is determined. The QoS reservation response is determined based on the QoS control policy response and a network QoS policy. For example, the QoS reservation response can be determined based on a SPR of a network service provider and a SPR of the content service provider. The QoS control policy response can thus be based on a user profile data store of the content service provider and a user profile data store of the network service provider. The QoS reservation response can include a bandwidth allocation. The bandwidth allocation can be a minimum or guaranteed bit rate (GBR) and/or a maximum bit rate (MBR).

In some embodiments, the QoS reservation request further comprises media information which can be used to determine a QoS reservation based on the quality level of the media. For example, the QoS reservation response can be determined based on the media having a 4K version and thereby have a bandwidth allocation for enabling 4K video streaming. The QoS reservation response can thereby be customized according to the quality levels of a piece of media or content. In some embodiments, the determining of the QoS reservation response is performed by a PCRF.

At block 410, a QoS reservation response is sent to the client. The client can then perform adaptive content streaming from the content service provider based on the QoS reservation response. The QoS reservation response can include a bandwidth allocation used by the client to select a representation from an MPD file, as described herein.

Referring now to Figure 5, a block diagram of a computer system platform in accordance with various embodiments is shown. With reference to Figure 5, an example system module for implementing embodiments disclosed above, such as those described in Figures 1-4. The system includes a general purpose computing system environment, such as computing system environment 500. The computing system environment 500 may include servers, desktop computers, laptops, tablets, mobile devices, and smartphones, etc. The computing system environment 500 typically includes at least one processing unit 502 and computer readable storage medium 504. Depending on the exact configuration and type of computing system environment, computer readable storage medium 504 is volatile (such as RAM), non-volatile (such as ROM, flash memory, etc.) or some combination of the two. Portions of computer readable storage medium 504 when executed may perform method of enhancing network coverage using service enhancer devices, as described herein.

Additionally in various embodiments, the computing system environment 500 may also have other features/functionalities. For example, the computing system environment 500 may also include additional storage (removable and/or non-removable) including, but not limited to, magnetic or optical disks or tape. Such additional storage is illustrated by removable storage 508 and non-removable storage 510. Computer storage media includes volatile and nonvolatile, removable and non-removable media implemented in any method or technology for storage of information such as computer readable instructions, data structures, program modules or other data. Computer readable medium 504, removable storage 508 and nonremovable storage 510 are all examples of computer storage media. Computer storage media includes, but is not limited to, RAM, ROM, EEPROM, flash memory or other memory technology, expandable memory (e.g. USB sticks, compact flash cards, SD cards), CD-ROM, digital versatile disks (DVD) or other optical storage, magnetic cassettes, magnetic tape, magnetic disk storage or other magnetic storage devices, or any other medium which can be used to store the desired information and which can be accessed by the computing system environment 500. Any such computer storage media is part of the computing system environment 500.

The computing system environment 500 may also contain communications connection(s) 512 that allow it to communicate with other devices. Communications connection(s) 512 are an example of communication media. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, radio frequency (RF), infrared and other wireless media. The term computer readable media as used herein includes both storage media and communication media.

Communications connection(s) 512 may allow the computing system environment 500 to communicate over various networks types including, but not limited to, fibre channel, small computer system interface (SCSI), Bluetooth, Ethernet, Wi-Fi, Infrared Data Association (IrDA), Local area networks (LAN), Wireless Local area networks (WLAN), wide area networks (WAN) such as the internet, serial, and universal serial bus (USB). It is appreciated the various network types that the communication connection(s) 512 connect to may run a plurality of network protocols including transmission control protocol (TCP), user datagram protocol (UDP), Internet Protocol (IP), real-time transport protocol (RTP), real-time transport control protocol (RTCP), file transfer protocol (FTP), and hypertext transfer protocol (HTTP), etc.

In further embodiments, the computing system environment 500 may also have input device(s) 514 such as a keyboard, mouse, a terminal or terminal emulator (either directly connected or remotely accessible via telnet, SSH, HTTP, SSL, etc.), a pen, voice input device, touch input device, a remote control, etc. Output device(s) 2016 such as a display, speakers, LEDs, etc., may also be included.

The computer readable storage medium 504 includes a client QoS negotiation module 520, a network QoS negotiation module 540, and a content service provider QoS negotiation module 560. The client QoS negotiation module 520, the network QoS negotiation module 540, and the content service provider QoS negotiation module 560 may each reside on a respective device.

The client QoS negotiation module 520 includes a media access module 522, a QoS reservation module 524, a streaming module 524, and a user information module 528. The media access module 522 accesses media and media description information, as described herein. For example, the media description information can be an MPD file. The QoS reservation module 524 generates a QoS reservation request and receives a QoS reservation response, as described herein. For example, the QoS reservation module 524 can generate a QoS reservation request including user information from the user information module 528. The streaming module 524 streams data from a service provide based on the QoS reservation response, as described herein. The user information module 528 receives, stores, and accesses user information associated with streaming of content, as described herein.

The network QoS negotiation module 540 includes a communication module 542, a QoS reservation determination module 544, a network service module 546, a QoS reservation request module 548, a QoS control policy request module 550, and a user data store 552. The communication module 542 receives one or more QoS reservation requests and sends one or more QoS control policy requests and one or more QoS reservation control responses, as described herein. The QoS reservation module 544 determines a QoS reservation response based on a QoS reservation request, a QoS control policy response, and network user information, as described herein. For example, the network user information can be from the user data store 552. The network service module 546 implements a QoS reservation for communications between a client device and a content service provider, as described herein. For example, the QoS reservation for communications can be for adaptive streaming. The QoS reservation request module 548 receives and responds to a QoS reservation request, as described herein. The QoS control policy request module 550 generates a QoS control policy request for a content service provider, as described herein. The user data store 552 stores network user information, as described herein. The network user information can be used in making a QoS reservation determination and can be stored in a network SPR.

The content service provider QoS negotiation module 560 includes a user data store 562, a QoS control policy module 564, and a data service data store 566. The user data store 562 stores user information associated with one or more pieces of data in the data service data store 566, as described herein. For example, the user information can be a user profile in a content service provider SPR and the pieces of data can be pieces of video or pieces of content including websites, databases, or application content. The user information in the user data store 562 can be used by the QoS control policy module 564. The QoS control policy module 564 determines a QoS control policy response to a QoS control policy request, as described herein. For example, the QoS control policy request can be from the network QoS negotiation module 540. The data service data store 566 receives, stores, and facilitates access to data that can include video content, as described herein.

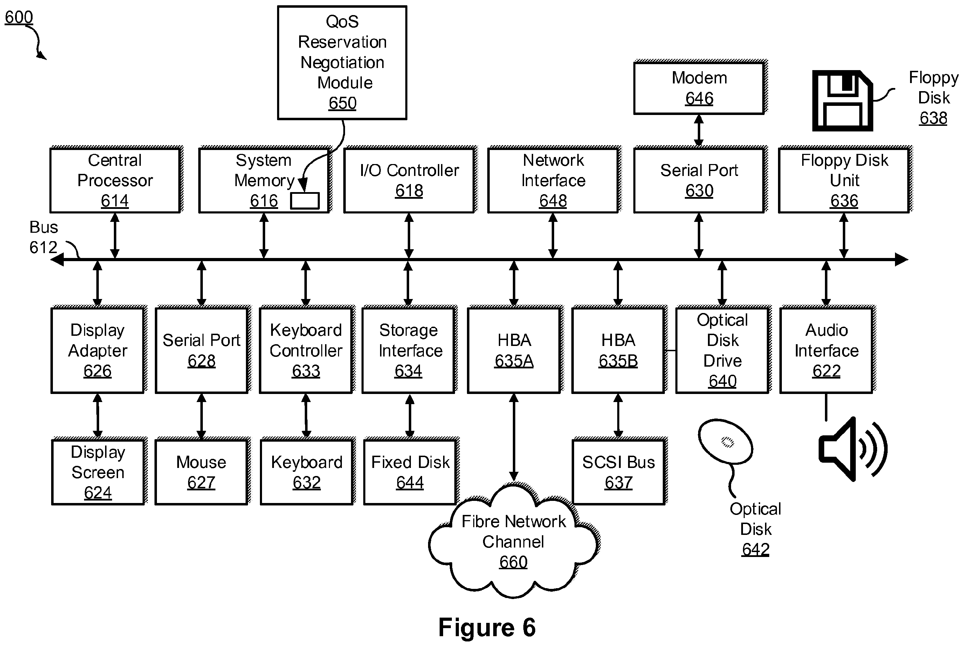

Referring now to Figure 6, a block diagram of another computer system in accordance with various embodiments is shown. Figure 6 depicts a block diagram of a computer system 600 suitable for implementing embodiments of the present invention. Computer system 600 includes a bus 612 which connects the major subsystems of the computer system 600, such as a central processor 614, a system memory 616 (typically RAM, but which may also include ROM, flash RAM, or the like), an input/output controller 618, an external audio device, such as a speaker system 620 via an audio output interface 622, an external device, such as a display screen 624 via a display adapter 626, serial ports 628 and 630, a keyboard 632, a storage interface 634, a floppy disk drive 636 operative to receive a floppy disk 638, a host bus adapter (HBA) interface card 635A operative to connect with a Fibre Channel network 660, a host bus adapter (HBA) interface card 635B operative to connect to a Small Computer System Interface (SCSI) bus 637, and an optical disk drive 640 operative to receive an optical disk 642. Also included are a mouse 627, a modem 646, and a network interface 648.

It is appreciated that the network interface 648 may include one or more Ethernet ports, wireless local area network (WLAN) interfaces, etc., but is not limited thereto. System memory 616 includes a QoS reservation negotiation module 650 for determining a QoS reservation for a client device based on a network user information and content service provider user information thereby providing a QoS reservation tailored based on the network and the content service provider, as described herein.

According to some embodiments, the QoS reservation negotiation module 650 may include other modules for carrying out various tasks (e.g., modules of Figure 5). It is appreciated that the QoS reservation negotiation module 650 can be located anywhere in the system and is not limited to the system memory 616. For example, parts of the QoS reservation negotiation 650 may be located within the central processor 614 and/or the network interface 648 but are not limited thereto.

The bus 612 allows data communication between the central processor 614 and the system memory 616, which may include read-only memory (ROM) or flash memory (neither shown), and random access memory (RAM) (not shown), as previously noted. The RAM is generally the main memory into which the operating system and application programs are loaded. The ROM or flash memory can contain, among other code, the Basic Input-Output system (BIOS), which controls basic hardware operation such as the interaction with peripheral components. Applications resident with computer system 600 are generally stored on and accessed via a computer readable medium, such as a hard disk drive (e.g., fixed disk 644), an optical drive (e.g., optical drive 640), a floppy disk unit 636, or other storage medium. Additionally, applications can be in the form of electronic signals modulated in accordance with the application and data communication technology when accessed via network modem 646 or network interface 648.

The storage interface 634, as with the other storage interfaces of computer system 600, can connect to a standard computer readable medium for storage and/or retrieval of information, such as a fixed disk drive 644. A fixed disk drive 644 is a part of computer system 600 or is separate and accessed through other interface systems. The network interface 648 may provide multiple connections to networked devices. Furthermore, a modem 646 may provide a direct connection to a remote server via a telephone link or to the Internet via an Internet service provider (ISP). The network interface 648 provides one or more connections to a data network, which may consist of any number of other network-connected devices. The network interface 648 may provide such connection using wireless techniques, including digital cellular telephone connection, Cellular Digital Packet Data (CDPD) connection, digital satellite data connection or the like.

Many other devices or subsystems (not shown) is connected in a similar manner (e.g., document scanners, digital cameras and so on). Conversely, not all of the devices shown in Figure 6 need to be present to practice the present disclosure. The devices and subsystems can be interconnected in different ways than shown in Figure 6. Code to implement the present disclosure can be stored in computer-readable storage media such as one or more of system memory 616, fixed disk 644, optical disk 642, or floppy disk 638.

Moreover, regarding the signals described herein, those skilled in the art will recognize that a signal can be directly transmitted from a first block to a second block, or a signal can be modified (e.g., amplified, attenuated, delayed, latched, buffered, inverted, filtered, or otherwise modified) between the blocks. Although the signals of the above described embodiment are characterized as transmitted from one block to the next, other embodiments of the present disclosure may include modified signals in place of such directly transmitted signals as long as the informational and/or functional aspect of the signal is transmitted between blocks. To some extent, a signal input at a second block can be conceptualized as a second signal derived from a first signal output from a first block due to physical limitations of the circuitry involved (e.g., there will inevitably be some attenuation and delay). Therefore, as used herein, a second signal derived from a first signal includes the first signal or any modifications to the first signal, whether due to circuit limitations or due to passage through other circuit elements which do not change the informational and/or final functional aspect of the first signal.

In the foregoing specification, embodiments have been described with reference to numerous specific details that may vary from implementation to implementation. Thus, the sole and exclusive indicator of what is the invention, and is intended by the applicant to be the invention, is the set of claims that issue from this application, in the specific form in which such claims issue, including any subsequent correction. Hence, no limitation, element, property, feature, advantage, or attribute that is not expressly recited in a claim should limit the scope of such claim in any way. Accordingly, the specification and drawings are to be regarded in an illustrative rather than a restrictive sense.

## Claims

1. A method of negotiating Quality of Service, QoS, within a network, wherein the method is performed by a network service provider and the method comprises:
receiving a QoS reservation request from a client, the QoS reservation request comprising user information (220);
sending a QoS control policy request to a content service provider, the QoS control policy request comprising the user information (222);
receiving from the content service provider a QoS control policy response based on a QoS policy of the content service provider, in response to the QoS control policy request (224);
determining a QoS reservation response based on both the QoS control policy response and a network QoS policy; and
sending the QoS reservation response to the client (226);
wherein the QoS reservation response comprises a guaranteed bit rate, GBR, and/or a maximum bit rate, MBP.

2. The method of Claim 1, wherein the determining is performed by a policy control and charging rules function, PCRF.

3. A device comprising:
a processor;
a transmitter and a receiver coupled to the processor and operable for communicating with a client device and a content service provider device; and
a memory coupled to the processor and having stored therein instructions that, when executed, cause the device to perform a method comprising:
receiving from the client device a quality of service, QoS, reservation request comprising user information;
sending to the content service provider device a QoS control policy request comprising the user information;
in response to the QoS control policy request, receiving from the content service provider a QoS control policy response based on a user profile of a content service provider associated with the content service provider device;
determining a QoS reservation response based on both the QoS control policy response and a network QoS policy; and
sending the QoS reservation response to the client device;
wherein the QoS reservation response comprises a guaranteed bit rate, GBR, and/or a maximum bit rate, MBR.

4. The device of Claim 3, wherein the content service provider device is configured for adaptive streaming of video content.

## Patentansprüche

1. Verfahren zur Aushandlung von Dienstqualität, QoS, innerhalb eines Netzwerks, wobei das Verfahren von einem Netzwerkdienstanbieter durchgeführt wird, und das Verfahren umfasst:
Empfangen einer QoS-Reservierungsanforderung von einem Client, wobei die QoS-Reservierungsanforderung Benutzerinformationen umfasst (220);
Senden einer QoS-Steuerungsrichtlinienanforderung an einen Inhaltsdienstanbieter, wobei die QoS-Steuerungsrichtlinienanforderung die Benutzerinformationen umfasst (222);
Empfangen einer QoS-Steuerungsrichtlinienantwort vom Inhaltdienstanbieter basierend auf einer QoS-Richtlinie des Inhaltsdienstanbieters in Reaktion auf die QoS-Steuerungsrichtlinienanforderung (224);
Bestimmen einer QoS-Reservierungsantwort sowohl basierend auf der QoS-Steuerungsrichtlinienantwort als auch einer Netzwerk-QoS-Richtlinie; und
Senden der QoS-Reservierungsantwort an den Client (226);
wobei die QoS-Reservierungsantwort eine garantierte Bitrate, GBR, und/oder eine maximale Bitrate, MBR, umfasst.

2. Verfahren nach Anspruch 1, wobei das Bestimmen von einer Richtliniensteuerungs- und Gebührenerfassungsregelfunktion, PCRF, durchgeführt wird.

3. Vorrichtung, umfassend:
einen Prozessor;
einen Sender und einen Empfänger, die mit dem Prozessor gekoppelt und zum Kommunizieren mit einer Client-Vorrichtung und einer Inhaltsdienstanbietervorrichtung funktionsfähig sind; und
einen Speicher, der mit dem Prozessor gekoppelt ist und Anweisungen darin gespeichert aufweist, die bei Ausführung die Vorrichtung zum Durchführen eines Verfahrens veranlassen, das umfasst:
Empfangen einer Dienstqualitäts(QoS)-Reservierungsanforderung, die Benutzerinformationen umfasst, von der Client-Vorrichtung;
Senden einer QoS-Steuerungsrichtlinienanforderung, welche die Benutzerinformationen umfasst, an die Inhaltsdienstanbietervorrichtung;
Empfangen in Reaktion auf die QoS-Steuerungsrichtlinienanforderung einer QoS-Steuerungsrichtlinienantwort vom Inhaltsdienstanbieter basierend auf einem Benutzerprofil eines Inhaltsdienstanbieters, der mit der Inhaltsdienstanbietervorrichtung assoziiert ist;
Bestimmen einer QoS-Reservierungsantwort sowohl basierend auf der QoS-Steuerungsrichtlinienantwort als auch einer Netzwerk-QoS-Richtlinie; und
Senden der QoS-Reservierungsantwort an die Client-Vorrichtung;
wobei die QoS-Reservierungsantwort eine garantierte Bitrate, GBR, und/oder eine maximale Bitrate, MBR, umfasst.

4. Vorrichtung nach Anspruch 3, wobei die Inhaltsdienstanbietervorrichtung zum adaptiven Streamen von Videoinhalt konfiguriert ist.

## Revendications

1. Procédé de négociation d'une qualité de service, QoS, dans un réseau, le procédé étant exécuté par un fournisseur de services de réseau et le procédé comprenant :
la réception d'une demande de réservation de QoS depuis un client, la demande de réservation de QoS comprenant des informations d'utilisateur (220) ;
l'envoi d'une demande de stratégie de commande de QoS à un fournisseur de services de contenus, la demande de stratégie de commande de QoS comprenant les informations d'utilisateur (222) ;
la réception depuis le fournisseur de services de contenus d'une réponse de stratégie de commande de QoS basée sur une stratégie de QoS du fournisseur de services de contenus, en réponse à la demande de stratégie de commande de QoS (224) ;
la détermination d'une réponse de réservation de QoS en fonction à la fois de la réponse de stratégie de commande de QoS et d'une stratégie de QoS de réseau ; et
l'envoi de la réponse de réservation de QoS au client (226) ;
la réponse de réservation de QoS comprenant un débit binaire garanti, GBR, et/ou un débit binaire maximum, MBR.

2. Procédé selon la revendication 1, dans lequel la détermination est exécutée par une fonction de commande de stratégies et de règles de facturation, PCRF.

3. Dispositif comprenant :
un processeur ;
un émetteur et un récepteur couplés au processeur et exploitables pour communiquer avec un dispositif client et un dispositif de fournisseur de services de contenus ; et
une mémoire couplée au processeur et sur laquelle sont mémorisées des instructions qui, lorsqu'exécutées, amènent le dispositif à exécuter un procédé comprenant :
la réception depuis le dispositif client d'une demande de réservation de qualité de service, QoS, comprenant des informations d'utilisateur ;
l'envoi au dispositif de fournisseur de services de contenus d'une demande de stratégie de commande de QoS comprenant les informations d'utilisateur ;
en réponse à la demande de stratégie de commande de QoS, la réception depuis le fournisseur de services de contenus d'une réponse de stratégie de commande de QoS basée sur un profil utilisateur d'un fournisseur de services de contenus associé au dispositif de fournisseur de services de contenus ;
la détermination d'une réponse de réservation de QoS en fonction à la fois de la réponse de stratégie de commande de QoS et d'une stratégie de QoS de réseau ; et
l'envoi de la réponse de réservation de QoS au dispositif client ;
dans lequel la réponse de réservation de QoS comprend un débit binaire garanti, GBR, et/ou un débit binaire maximum, MBR.

4. Dispositif selon la revendication 3, dans lequel le dispositif de fournisseur de services de contenus est configuré pour une diffusion continue adaptative de contenus vidéo.
